# EUROPEAN PATENT APPLICATION

(11) **EP 4 759 536 A1**
(43) Date of publication of application: **17.06.2026**
(21) Application number: 24219999.0
(22) Date of filing: 13.12.2024
(51) Int. Cl.: B32B 5/02, B32B 5/26

(54) **JET FLAME SHIELD FOR PROTECTION AGAINST BATTERY THERMAL RUNAWAY**

(71) Applicant: Autoneum Management AG, 8406 Winterthur (CH)
(72) Inventor: Burnett, Eric Christoph, 48703 Stadtlohn (DE); Sinne, Yannik, Drensteinfurt (DE)

(57) **Abstract**

Jet flame shield for a battery of an electric vehicle, comprising at least 3 fibrous layers, a middle fibrous layer sandwiched between two inert fibrous layers, obtainable by superposition of the at least 3 layers and penetrating all layers with a binder to form a substantially closed shield, and whereby the middle fibrous layer is a mechanically bonded nonwoven layer of carbon fibers.

## Description

### Technical Field

The invention is directed to a jet flame shield for battery storage in particularly in electric vehicles and a method of producing such a shield.

### Background

Pure electric driven vehicles are relying for their power on a battery system comprising multiple batteries placed in an enclosure. The enclosure, for instance in the form of a box, case, pack or housing may be placed underneath the vehicle, in most cases underneath the passenger compartment. The same or similar type of storage is also used to keep batteries for storing electricity generated by power plants, like sun panels or wind energy generators. Such battery housing may be used in vehicles like cars, trucks or light commercial vehicles as well as in battery storage system in housing or in storage containers.

These batteries may be lithium ion-based batteries. If these batteries are maltreated, like electrical overloading or mechanical damage, it may trigger an internal cell temperature rise. Above a temperature of 120°C the internal barrier between the chemical liquid compartments in the cell is degrading, this will further increase the temperature due to a chemical reaction within the cell. If the temperature reaches around 260°C this battery will go in thermal runaway, with a temperature step change to 800°C, combined with a jet fire shooting out of the cell vent, and hot particle ejecta.

These thermal runaway event, both in static storage facilities, and within a battery housing of a car, is an event to be avoided but in case it occurs extreme measures are needed to reduce the effect, in particularly to allow people sufficient time to react and safely distance themselves from a thermal runaway event.

In general, all batteries are placed with their vent in one direction with a flame shield facing these vents. Standard flame shields alone cannot withstand a thermal runaway event, as they will be perforated within a few seconds, they might work as thermal barriers between battery cells or modules but will not be able to withstand the jet fire and particle ejecta when faced head on. There is a need for a shield that can withstand a thermal runaway at the site of the cell vent where the jet fire occurs. For the sake of simplicity, we will call this type of shield a jet flame shield.

Jet flame shield, as used in the current description is meant to be a cover, that can withstand a thermal runaway event directed against its surface comprising jet fire and hot particle ejecta coming out of the cell for a given period as defined by the car makers.

Current state-of-the-art thermal runaway shields used are based on a thick mica layer. However, running a pyrotest shows that a mica shield will perforate already after 8 seconds exposure for a 1 mm thickness and 13 s for a 2mm thickness. Such mica plates are a dense material which can only be optimised by increasing in thickness. While the overall space for a shield is limited. Current mica plates are at their border of optimisation as an increase of thickness is not given in the current battery housing structures, while the material is dense and will increase the weight of the overall battery including the housing considerable.

Mica has also the problem of sourcing, at it is based on a mined material the impact on the environment may pose additional problems, while in certain mining districts ethical mining standards may not be given.

There is a need for alternative jet flame shields, that can withstand thermal runaway directed against their surface at least comparable to the current mica shields, without the need for a large packing space as the overall space in a battery housing is limited. The alternative jet flame shield is preferably lighter than the current solution, can fit in a small packaging space, can be moulded in any shape and is tuneable depending on the requirements for a specific battery housing design. It is the goal to provide for such an improved jet flame shield.

### Summary of the invention

The object of the invention is achieved by a jet flame shield for a battery of an electric vehicle, in particular a lithium-ion battery, characterized in that it comprises at least 3 fibrous layers comprising inert fibers, and a middle fibrous layer sandwiched between two outer fibrous layers, obtainable by superposition of the at least 3 layers and penetrating all layers with a binder such that the fibers within the layer are bonded to neighboring fibers and the layers are bonded face to face to the adjacent layer and whereby the voids between the fibers are substantially filled with binder to form a substantially closed shield, and whereby the middle fibrous layer is comprising a nonwoven layer of mechanically bonded carbon fibers.

Surprisingly, the combination of a mechanically bonded nonwoven of carbon fibers increases the durability of a thermal runaway directed against their surface, to equal or better than the mica shields of the prior art. It was found that the combination of fibrous outer layers comprising inert fibres together with a mechanically bonded carbon layer as well as all layers impregnated with the binder, would show a synergistic effect, compared to the layers used on their own.

Preferably the jet flame shield according to the invention subjected to a pyro-test as defined in the disclosure will not show a perforation before 13s exposure, preferably not before 15s exposure, preferably not before 20s exposure.

The middle layer, sandwiched between the two fibrous layers comprising inert fibers is a mechanical bonded nonwoven layer of carbon fibers.

Carbon fibres used in the part according to the invention include those produced by carbonizing various organic materials, e.g., cotton wool, lignin, regenerated cellulose or but particularly to a fibre of a synthetic resinous material such as polyacrylonitrile. Carbonized polyacrylonitrile fiber may include carbonized fibers based on co-polymers or terpolymers of acrylonitrile with other monomers, e.g., methyl methacrylate or vinyl acetate, either alone or to which have been added polymers compatible with them such as phenolic resins or Friedel-Crafts condensates.

Carbonization is the thermal process whereby stabilized (oxidized) PAN or pitch fibers are heated to a temperature in the range of 1000 - 2000°C, in order to develop the ultimate strength and modulus of the fibers.

Carbonization is carried out with small stepwise heating rates (which implies longer residence times), while pyrolysis is usually carried out with fast heating rates (sometimes reaching the maximum temperature in a single step change, requiring short residence times).

The carbon fibers used may be sized, whereby a polymeric coating was added to the carbon fibers in order to improve handling and processing. In particularly a sizing may be used to increase compatibility between reinforcing fibers and crosslinked binding system used. These carbon fibers are preferably comprising of carbonized oxidized organic fibers, preferably polyacrylonitrile (PAN)-based carbon fibers. Optionally they may be treated on the surface to further enhance their performance during a runaway event.

Preferably the carbon fibers are recycled carbon fibers, obtained from cut offs of endless filament materials, like unused filament rovings, carbon fiber textile cutoffs, UD tapes or Organosheets or the like. These may come from other industries with similar requirements like airplane or aerospace applications. Preferably the recycled carbon fibers comprise at least 70% of PAN-based carbon recycled fibers.

The fiber fineness of the carbon fibers is preferably in the range of at least 1 dtex. The length of the carbon fibers is in the range between 30 mm and 80 mm.

The carbon fiber layer is preferably mechanical bonded, for instance by needling, or may be a knitted, woven or stitched bonded mat. The mechanical binding of the carbon fiber middle layer enhances the abrasive resistance and may enhance the eruption barrier effect, withstanding the power of the gas flow against the surface of the layer.

In case of just a laid fibrous or endless filament nonwoven layer, the fibers could be pushed away or moved aside by the gas pressure thereby negating the flame protecting properties of the carbon fiber within the jet flame shield, in case of a mechanically bonded layer this becomes more durable, causing a delay in the time to perforation and preventing the gas pressure from creating an opening in the carbon fiber network.

Preferably, a mechanical bonded mat or felt of carbon fibers may be achieved with a needle felt layer, whereby the needling is enough to obtain an entangled web of fibers, whereby the entangling as well as the increased fiber friction together may increase the exposure time before a perforation occurs.

Surprisingly, not the use of carbon fibers alone, but the use of carbon fibers in a mechanical bonded mat or felt was increasing the resistance of the layer against a thermal runaway event, hence increasing the exposure time before a perforation.

Also, the use of the mechanical bonded layer of carbon fibers, rather than mixing the carbon fibers into the glass fibers or other fiber type reinforcements, increased the exposure time of the overall trim part.

Preferably, the middle fibrous mechanically bonded nonwoven layer comprising carbon fibers has an area weight of at least 100gsm, preferable an area weight between 150 and 600 gsm. The use of fibrous layers comprising inert fibers to sandwich the carbon layer or layers not only enhances the results in the pyrotest but also reduces the risk of an electric current or spark jump between the battery and the outer often metal casing as measured in a dielectric strength test. Any sparks will also increase the risk of any thermal runaway event of neighboring cells.

Hence the inert fibrous layerswill not only increase the exposure time before a perforation during a thermal runaway, but also decrease the risk for a possible electric short cut. Preferably the two inert fibrous layerscomprises inert fibers with a melting temperature above 600°C, preferably above 1000°C.

Preferably, the two outer layers comprise inert fibers chosen from any of glass fibers, aramid fibers, basalt fibers or a mixture of such fibers, more preferably of glass fibers. The inert fibers for the outer layers may be formed in a layer as known in the industry, preferably a glass fiber mat, for instance obtained by a carding, cross-lapping and needling process, or an airlaid, needling process is sufficient to enhance the features of the jet flame shield. The two inert fibrous layersmay comprise a fibrous mat of cut inert fibers. The outer layers may be different in their fiber mixture. In particularly the outer layer facing the battery vents may comprise glass or basalt while the outer layers facing away from the battery vent, in principle behind the carbon fiber layer may comprise a mixture including aramid fibers.

The inert fibrous layersmay be laid in a mat or fibrous layer, eventually lightly bonded for ease of handling and transport. Preferably the fibrous outer layers are bonded with a binder, preferably an emulsion binder based on polyvinyl alcohol or polyvinyl acetate or copolyester.

Preferably the two inert fibrous layers have an area weight per layer of at least 300gsm, preferably at least 600gsmpreferably at least 900 gsm.

Preferably glass fiber layers with such a preferred area weight are used.

The area weight of the mat is limited towards the high weights by the space available for the full flame shield. This is in most cases less than 5mm for all layers.

Surprisingly, it was found that the total area weight of the outer layer is influencing the pyrotest results. Preferably the total amount of fibers in the two outer layer comprising inert fibers is at least 900 gsm, preferably at least 1800 gsm.

Preferably, the two inert fibrous layersare equal in weight and/or material.

The fibrous outer layers preferably comprise fibers with a staple length between 30mm and 70 mm.

In a preferred solution the jet flame shield comprises inert fibrous layers and mechanically bonded carbon fibers in an alternating layout for instance an outer fibrous layer- carbon fiber layer-outer fibrous layer- carbon fiber layer - outer fibrous layer. The number of layers may be extended with one or more of a pair of layers comprising a carbon layer and an outer fibrous layer, preferably the carbon layer is always sandwiched between two inert fibrous layersand all layers are impregnated with the binder. Preferably, the inert fibrous layersare equal in weight and/or material. Preferably the carbon layers may differ in area weight, carbon fiber source and or mechanical bonding, for instance middle layers close to the battery may comprise needled felt, while carbon layers further away may comprise knitted or scrim type layers.

The jet flame shield is moulded in its final thickness and shape, while impregnated with the binder to substantially fill all voids in all layers thereby binding the layers together. Preferably the shield has a thickness of between 0.7 and 5mm, preferably of between 1.0 and 3 mm. The thickness may vary over the surface of the part and is dependent on the final design of the battery casing as well as the functions added.

The full stack of layers is impregnated with a thermoset binder, preferably a binder based on polyurethane, polyamide, phenolic, epoxy or silicon, preferably a rigid polyurethane. Upon impregnation under pressure the material is densified.

Preferably a flame retardant is added to the binder to reduce the risk of fire traveling via the binding system to neighboring battery cells thereby enhancing the overall speed of the event. This may be even more important, if the car was in an accident, where there is a risk that the car ends up on its side.

The binder and the flame retardant as such may have an effect on the flammability of the flame or fire but does not have a significant effect on the exposure time before a perforation of the actual thermal runaway. The use of the binder in addition also aids the production and installation of the jet flame shield in the battery case without losing fibers, which might cause other problems during the use of the batteries.

Preferably at least 15%, preferably between 20 and 40% by weight based on the full jet flame shield is the binder.

Preferably the binder is based on a rigid polyurethane mixture.

The polyurethane according to the invention may be obtained from the reaction of a polyurethane forming mixture comprising polyol and isocyanate, which may be premixed just before application. The polyurethane forming mixture generally used in the process of the present invention will include:
at least one polyol component with an average OH number of 300 to 900, the individual polyols having a functionality of 2 to 6; optionally a blowing agent, preferably water; one or more catalysts including amine-based and metal-based catalysts; surfactants or stabilizers; at least one isocyanate, preferably at least one of an isomer blend of methylene diphenyl diisocyanate (MDI), polymeric MDI, or prepolymers thereof; mould release agent and additives such as fillers, colorants, or rheology modifiers. Suitable polyols can be polyester, or polyether based.

The jet flame shield comprising of at least 3 layers, with two outer fibrous layer and a middle layer comprising mechanically bonded carbon fibers impregnated with a binder may be moulded in a flat plate or a 3-Dimensional shape to enable a good covering of battery cels. Preferably the jet flame shield is placed above the vent opening of the cells. Additional gas-guiding elements may be added to the design of the flame shield shape, preferably in the form of at least partial channels, domes, or blocking elements. It was found that the closed construction of the jet flame shield was able to guide gas from the battery cells to venting systems in the casing. This may occur during normal usage of the batteries or at the onset of a thermal runaway, whereby in an initial phase the battery cell is producing gas.

To further enhance the function of the jet flame shield and or the gas guiding the shield may further comprise at least one area with a sealing and/or gasket. The seal or gasket may be either of permanent or nonpermanent nature. A permanent nature would enhance the quality of a sealing or gasket. However, in case a replacement of single battery cells a nonpermanent solution may be an option. A nonpermanent seal or gasket enables opening and closing of the battery case and an easy access of the batteries within. Preferably the seal or gasket adheres to adjacent material to form a bond. This bond can be to both sides or just one side of the opening to be sealed.

The seal or casket may be based on butyl, polyurethane, silyl modified polymers (SMPs) or epoxy.

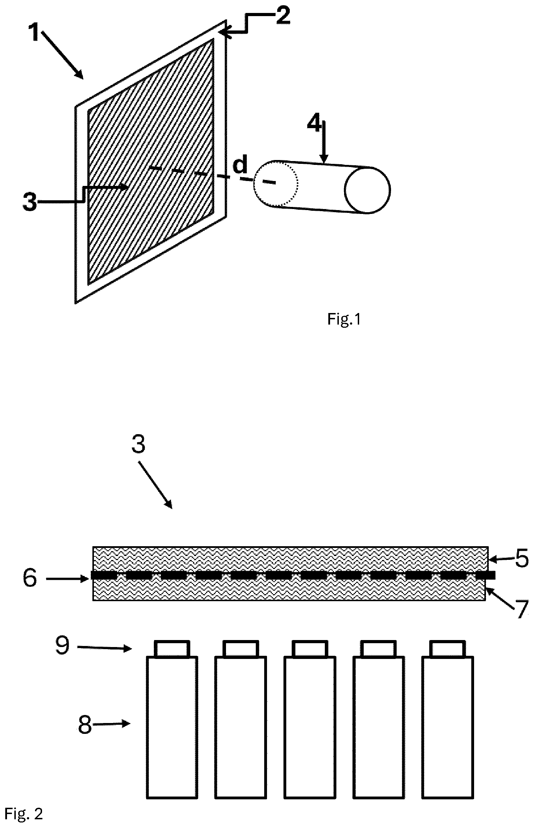

For the pyro test (1) a test plate of the material (3) is placed in a metal holding frame (2). A pyrotechnical body (4) WECO CE 0589-T1-0025, (stage firework Volcano with Net explosive quantity (NEQ) 245 g, at least 20s burning time and a height when burned without constrains of 7m. The firework specification is of the type >1200°C), was placed with the fire direction towards the test plate, at a distance (d) of 30 mm from the middle of the plate to the tip of the pyrotechnical body (number in brackets see figure 1 of setup,). The pyrotechnical body was ignited with a remote control giving a signal to an electric igniter. The whole process was filmed and the time until perforation was measured based on the filmed document. In addition, the increase in temperature was measured with an infrared camera at the centre of the back surface of the panel throughout the full test duration.

This test is accepted by the car manufacturers as a simulation of a thermal runaway event at the extreme case whereby not only high temperatures are achieved, but also the additional effect of propelling gas, particles and debris is measurable. A material is passed if at the end of the burning, the material is unperforated. This would be a passing time of at least 20s.

A jet flame shield according to the invention can be part of a battery casing for traction batteries for an electric vehicle, either while placed in a vehicle or later in life when used as an electrical storage system, Such a battery storage may comprise at least one battery cell with a battery venting opening, further comprising at least one jet flame shield according to the invention, placed adjacent and opposite of a battery cell facing the battery venting opening such that at least a jet blast of a thermal runaway event will hit the jet flame shield. Preferably the jet flame shield is opposite of the venting opening such that the jet blast will be directed substantially perpendicular to the surface of the jet flame shield such that the surface affected is minimal reducing the effects of abrasion over a larger surface.

Battery storage for traction batteries comprising at least one jet flame shield according to the invention, whereby the jet flame shield is moulded in a 3-dimensional shape such that any gas emission of a battery cell is guided to a vent opening either in the shield and or in the battery storage housing.

Battery storage for traction batteries comprising at least one jet flame shield according to one of the preceding claims, further comprising a seal between the jet flame shield and at least part of the battery storage such that no hot gas can escape between the jet flame shield, and the battery storage adjacent the backside of the jet flame shield.

Method of producing a jet flame shield according to the invention with at least the steps of
- providing the stacked layout of the inert fibrous layers and the middle fibrous layer sandwiched between the outer layers, applying the binder to the thus stacked layout and moulding the thus formed stack to the preferred shape and thickness to form the jet flame shield such that the fibers within the layer are bonded to neighboring fibers and the layers are bonded face to face to the adjacent layer and whereby the pores between the fibers are substantially filled with binder to form a substantially closed shield, and whereby the middle fibrous layer is a mechanically bonded nonwoven layer of carbon fibers.

Preferably in the method as just described, the middle fibrous layer comprising carbon fibers is obtained by the process step, whereby carbon fibers are laid to a fibrous web by means of a carding process, the thus laid web is cross lapped in at least more than 1 ply and subsequently mechanical bonded, preferably by needling.

### Drawings

Figure 1 set up of the pyro-test
Figure 2 is schematic layout of the jet flame shield
Figure 3 is schematic of a battery housing with a flame shield according to the invention

Figure 1 is showing the pyro test (1) set up whereby a test plate of the material to be tested (3) is placed in a metal holding frame (2). A pyrotechnical body (4) WECO CE 0589-T1-0025, (stage firework Volcano with Net explosive quantity (NEQ) 245 g, at least 20s burning time and a height when burned without constrains of 7m. The firework specification is of the type >1200°C), was placed with the fire direction towards the test plate, at a distance (d) of 30 mm from the middle of the plate to the tip of the pyrotechnical body (number in brackets see figure 1 of setup,). The pyrotechnical body was ignited with a remote control giving a signal to an electric igniter. The whole process was filmed and the time until perforation was measured based on the filmed document.

This test is accepted by the car manufacturers as a simulation of a thermal runaway event at the extreme case whereby not only high temperatures are achieved, but also the additional effect of propelling gas, particles and debris is measurable.

An example of the jet flame shield according to the invention was measured and compared to reference materials as well as the material layers alone.

Figure 2 is showing a possible layout for a jet flame shield according to the invention comprising a sandwich of at least 3 fibrous layers, 2 inert fibrous layers 5 and 7, and a middle fibrous layer 6. The at least 3 layer sandwich is obtainable by superposition all layers and penetrating the stack of layers with a binder for instance a polyurethane hard foam mixture, such that the fibers within the layer are bonded to neighbouring fibers and the layers are bonded face to face to the adjacent layer and whereby preferably the pores between the fibers are substantially filled with binder to form a substantially closed shield, and whereby the middle sacrificial layer is comprising a nonwoven layer of mechanically bonded carbon fibers.

Substantially closed is defined as air impermeable having an air flow resistance (AFR) equal to or above 8000 N.s.m⁻³. The AFR is measured according to ISO 9053, using the direct airflow method (method A).

Such a jet flame shield may be used opposite the vent opening 9 of battery cells 8, such that upon runaway a jet flame will hit the jet flame shield substantially perpendicular to the surface.

The polyurethane is penetrating all voids in all layers hence not as such indicated in the figure. Depending on the thickness of the screen a small polyurethane layer may be formed on the surface without a negative impact on the overall performance of the shield.

The thickness of the jet flame shield may be variable. The thickness may vary to an increased thickness in the area of possible jet flame contact, while it may be thinner in areas where mounting or other appliances are in contact. Alternatively, the change of thickness may be due to formed guiding walls for possible gas guiding just before and during a thermal runaway event.

## Claims

1. Jet flame shield for a battery of an electric vehicle, in particular a lithium-ion battery, **characterized in that** it comprises at least 3 fibrous layers, a middle fibrous layer sandwiched between two inert fibrous layers, obtainable by superposition of the at least 3 layers and penetrating all layers with a binder such that the fibers within the layers are bonded to neighboring fibers and the layers are bonded face to face to the adjacent layer and whereby the voids between the fibers are substantially filled with binder to form a substantially closed shield, and whereby the middle fibrous layer is a mechanically bonded nonwoven layer of carbon fibers.

2. Jet flame shield according to claim 1, whereby the shield is subjected to a pyrotest as defined in the disclosure and a perforation will not form before 13s exposure, preferably not before 15s exposure, preferably not before 20s exposure.

3. Jet flame shield according to claim 1 or 2, whereby the carbon fibers of the middle fibrous layer are comprised of carbonized oxidized organic fibers, preferably polyacrylonitrile (PAN)-based carbon fibers.

4. Jet flame shield according to one of the preceding claims, whereby the carbon fibers of the middle fibrous layer are recycled carbon fibers, preferably comprising at least 70% of PAN-based carbon recycled fibers.

5. Jet flame shield according to one of the preceding claims, whereby the middle fibrous layer has an area weight of at least 100gsm, preferable an area weight between 200 and 600 gsm.

6. Jet flame shield according to one of the preceding claims whereby the two inert fibrous layers comprises inert fibers, preferably any of glass fibers, aramid fibers, basalt fibers or a mixture of such fibers, preferably of glass fibers.

7. Jet flame shield according to one of the preceding claims, whereby the two inert fibrous layers have an area weight per layer of at least 300gsm, preferably at least 450gsm, preferably at least 600 gsm.

8. Jet flame shield according to one of the preceding claims, whereby the two inert fibrous layers are equal in weight and/or material.

9. Jet flame shield according to one of the preceding claims, whereby the binder is a thermoset binder, preferably a binder based on polyurethane, polyamide, phenolic, epoxy or silicon.

10. Jet flame shield according to one of the preceding claims, whereby the jet flame shield is in a 3-Dimensional shape comprising gas-guiding elements, preferably in the form of at least partial channels, domes, or blocking elements.

11. Jet flame shield according to one of the preceding claims whereby the jet flame shield further comprises at least one area with a sealing and or gasket.

12. Jet flame shield according to claim 13, whereby the seal or gasket is either permanent or nonpermanent, preferably the seal or gasket adheres to adjacent material to form a bond.

13. Jet flame shield according to claim 13 or 14, whereby the seal or gasket is based on butyl, polyurethane, silyl modified polymers (SMPs) or epoxy.

14. Jet flame shield according to one of the preceding claims further comprising at least one of a mechanically bonded nonwoven consisting of carbon fibers and at least an additional inert fibrous layer on the jet flame shield such that the layers are alternating and the carbon fiber layers are covered from both sides with an inert fibrous layer of inert fibers, preferably glass fibers.

15. Battery storage for batteries , comprising at least one battery cell with a battery venting opening, further comprising at least one jet flame shield according to one of the preceding claims, placed adjacent and opposite of a battery cell facing the battery venting opening such that at least a jet blast of a thermal runaway event will hit the jet flame shield, preferably the jet flame shield is opposite of the venting opening such that the jet blast will be directed substantially perpendicular to the surface of the jet flame shield.

16. Battery storage for traction batteries comprising at least one jet flame shield accordingto the preceding claims, whereby the jet flame shield is formed in a 3-dimensional shape such that any gas emission of a battery cell is guided to a vent opening either in the shield and or in the battery storage.

17. Battery storage for traction batteries comprising at least one jet flame shield according to one of the preceding claims, further comprising a seal between the jet flame shield and at least part of the battery storage such that no hot gas can escape between the jet flame shield, and the battery storage adjacent the jet flame shield.

18. Method of producing a jet flame shield according to one of the preceding claims with at least the steps of
- providing the stacked layout of the inert fibrous layers and the middle fibrous layer sandwiched between the inert fibrous layers, applying the binder to the thus stacked layout and moulding the thus formed stack to the preferred shape and thickness to form the jet flame shield such that the fibers within the layer are bonded to neighboring fibers and the layers are bonded face to face to the adjacent layer and whereby the pores between the fibers are substantially filled with binder to form a substantially closed shield, and whereby the middle fibrous layer is a nonwoven layer of mechanically bonded carbon fibers.

19. Method according to claim 20, whereby the middle fibrous layer consisting carbon fibers is obtained by the process step, whereby carbon fibers are laid into a fibrous web by means of a carding process, the thus laid web is cross lapped in at least more than 1 ply and subsequently mechanical bonded, preferably by needling.
